Europäisches Patentamt

(19) European Patent Office  (11) Publication number: **0 085 847**

Office européen des brevets  **A1**

(12) **EUROPEAN PATENT APPLICATION**

(21) Application number: **83100347.0**  (51) Int. Cl.³: **C 10 G 33/02**

(22) Date of filing: **17.01.83**

(30) Priority: **05.02.82 US 345963**

(43) Date of publication of application:
**17.08.83 Bulletin 83/33**

(84) Designated Contracting States:
**FR GB IT NL**

(71) Applicant: **COMBUSTION ENGINEERING, INC.**
**1000 Prospect Hill Road**
**Windsor Connecticut 06095(US)**

(72) Inventor: **Sublette, Kerry Lyn**
**6815 East 47th Street**
**Tulsa Oklahoma 74145(US)**

(74) Representative: **Gross, Gernot K.**
**Kleiberweg 5**
**D-6200 Wiesbaden(DE)**

(54) Method and apparatus for electrostatically and mechanically dehydrating oil field emulsions.

㊞ A horizontally extended vessel (1) is compartmented into at least a first section (6) through which an oil well stream is flowed and subjected to an electric field, or fields, and a second section (12) through which the well stream from the first section is flowed into downwardly inclined plates (14) to complete the separation of the oil and water phase of the stream.

EP 0 085 847 A1

0085847

## METHOD AND APPARATUS FOR ELECTROSTATICALLY AND MECHANICALLY DEHYDRATING OIL FIELD EMULSIONS

### TECHNICAL FIELD

The present invention relates to the application of an electric field, or fields, and a downwardly inclined collection surface, or surfaces, in sequence for the progressively staged separation of the oil and water of a well stream. More particularly, the invention relates to providing an electric field, or fields, and a downstream separator having parallel plates which are downwardly inclined, followed by quiescent disengagement zones in which substantially horizontal flow of the separated liquids avoids any direct vertical flow opposition.

### BACKGROUND ART

The Oil Well Stream

There is an omnipresent need in the oil industry for rapid, high-volume liquid/liquid separation in which one of the liquid phases is conventional crude oil, or "syncrude" produced from tar sands, or shale oil, and the other is water, or brine. Oil and water are, of course, immiscible, however, an aqueous phase is frequently present in produced oil as a highly dispersed, discontinuous phase. The mixture is referred to as an emulsion. The source of this aqueous phase is formation water and/or condensed steam used in secondary and tertiary recovery.

Coalescence with an Electric Field

The removal of entrained or emulsified water from oil is a long-standing problem, as evidenced by the following patents and publications: U.S. Prestridge, 3,772,180, 1973; 3,847,775, 1974; 4,116,790, 1978; 4,308,127, 1981; Waterman, L.C., Chem. Eng. Progress, 61 (10), 51-57 (1965); Sjoblom, G.L. and Goren, S.L., I & EC Fund., 5 (4), 519-525 (1966). One of

T-820010

0085847

the more widely used methods of performing this separation involves the use of high voltage electric fields.  Two mechanisms
apparently operate to bring about coalescence of droplets of
relatively polar water, or brine, in a non-polar medium, such
as oil, with the force of an electric field.  First, the water
droplets may acquire a net charge by direct contact with a
charging electrode, or through convective transfer of charge
from the electrode by the oil.  An attractive force will exist
between water droplets which have acquired opposite charges.
These attractive forces promote coalescence.  Second, water
droplets in an electric field will become polarized through
alignment of the polar water molecules with the external field
and through the redistribution of mobile charged particles or
ions within the water droplet.  Attractive electrostatic forces
between oppositely charged regions of neighboring water droplets promote their coalescence.  The relative importance of
these two mechanisms is evidently determined by the physical
and chemical properties of the two phases.  Of particular importance is the electrical conductivity of the oil.  The mechanism of electrically enhanced coalescence has been discussed
extensively in scientific literature.  Refer to Pearce, C.A.R.,
Brit. J. of Appl. Phys., 5, 136-143 (1954); Allan, R.S. and
Mason, S.G., Trans. Far. Soc., 57, 2027-2040 (1961); Pohl, H.A.,
J. Appl. Phys., 22 (7), 869-871 (1951); Bailes, P.J. and Larkai,
S.K.L., Trans. I. Chem. E., 59, 229-237 (1981); Sadek, S.E. and
Hendricks, C.D., I&EC Fund., 13, 139-142 (1974).

A high voltage electric coalescing system is subject
to certain limitations with respect to the maximum water droplet size which may be achieved within the system.  Refer to
Sadek, S.E. and Hendricks, C.D., I&EC Fund., 13, 139-142 (1974),
and Waterman, L.C., Chem. Eng. Progress, 61 (10), 51-57 (1965).
The first of these limitations concerns the hydrodynamic forces
to which water droplets are exposed.  The acquired charge, or
polarization, of water droplets results in rapid motion of these
droplets in the area between two charged electrodes, or a
charged electrode and ground.  Superimposed upon this motion
are electroconvective currents generated in the continuous oil
phase.  These motions subject the water droplets to hydrodynamic
forces which may cause individual droplets to disperse.  The

T-820010

magnitude of hydrodynamic force required to disperse a water droplet is dependent, in part, upon droplet radius. The smaller the droplet radius, the greater the hydrodynamic force required to disperse the drop.

The second of these limitations concerns electrical stress on water droplets. It has been observed that there is a tendency for charged droplets to disperse. Refer to Doyle, A., Moffett, D.R., Vonnegut, B., J. Colloid Sci., 19, 136-143 (1964); Waterman, L.C., Chem. Eng. Progress, 61 (10), 51-57 (1965); Sadek, S.E. and Hendricks, C.D., I&EC Fund., 13, 139-142 (1974). The critical dispersing gradient at the droplet surface is observed to be inversely proportional to the square root of the droplet radius. Refer to Doyle, A., Moffett, D.R., Vonnegut, B., J. Colloid Sci., 19, 136-143 (1964). The larger the droplet, then, the lower the gradient at the droplet surface which will cause dispersing of the droplet. Excessive charge gradients at the droplet surface may be established through conductive or convective charging of the droplet, or through polarization of the water droplet. In conclusion, both hydrodynamic and electrical stresses in a high voltage electric coalescing system tend to establish a maximum water droplet size in the system. This maximum droplet size will be determined by the physical properties of the two liquid phases and the characteristics of the electrical field, or fields, employed. In addition to contributing to the establishment of a maximum achievable water droplet size, it should be noted that electrical stresses on large water droplets are particularly detrimental in the exit regions of the electrical field, or fields. Under the influence of electrical stresses the droplet dispersal mechanism is such that the daughter droplets produced are much smaller than the original droplet. When produced in the exit region of the electrical field these daughter droplets do not recoalesce and are generally of such a small size that quite long retention times are required for their gravitation if settling distances are appreciable. To increase the maximum droplet size beyond that attainable in the electric field, and to collect the small droplets produced by electrical stress dispersion in the exit regions of the electric field, calls for an additional mechanism and force. To meet this problem, the potential of the inclined plate separator is exploited.

Inclined Plate Separators

The term "inclined plate, or surface, separator" is herein defined as any device which functions to separate a dispersed liquid phase from a second immiscible, continuous liquid phase on the basis of a difference in density which incorporates the following features: 1) the total flow is divided into multiple channels wherein a droplet of the dispersed liquid phase has only a short distance to rise or fall before being collected at a surface; 2) the collection surfaces are inclined so that collected droplets of the dispersed liquid phase will move along the surface, encounter other droplets of dispersed phase, and coalesce to form larger droplets prior to leaving the surface.

The "inclined surface separator" is perhaps best typified by the separator developed many years ago by Royal Dutch Shell. The most common application of this separator has been in the removal of oil and sludge from refinery wastewater streams. The separator generally consists of an array of parallel flat, or corrugated, plates. The material for these plates may be metal, plastic, or fiberglass. Assembled, the array of plates are mounted in the flow stream at angle with respect to the horizontal, to become collection surfaces for the dispersed liquid of the stream. In typical operation, the droplets of oil rise the short distance between the plates, contact the bottom surface of a plate, move upward along the plate, and coalesce with other collected oil droplets. As a result, the coalesced oil droplets leaving the surfaces of the plate array are larger than those which enter the plate array. The larger drops rise at a greater velocity and are more effectively removed from the aqueous phase than the smaller droplets of the plate array influent. The increase in size of oil droplets affected by this form of separator significantly reduces the retention time required for adequate phase disengagement. Retention time is generally further reduced by the favorable, even-flow distribution created by hydraulic friction along the plates. Turbulence and large scale short circuiting are reduced. Decreased retention time translates into reduced vessel size and savings on capital expenditures. This form of separator can be reviewed in the following literature: Brunsmann, J.J.,
Cornelissen, J. and Eilers, H., J. WPCF, 51 (1), 44-55 (1962);
Miranda, J.G., Chem. Eng., 84 (3) 105-107 (1977); and Morrison,
J., Oil & Gas J., p. 86-88, (Dec. 14, 1970).

Though the inclined surface separator has found past application in the removal of oil from wastewater streams, the separator is equally well suited for the removal of water, or brine, droplets from oil. In this application, the dispersed droplets of aqueous phase simply fall, under the influence of gravity, the short distance between the plates where they collect and coalesce with other water droplets as they move down the inclined surface.

Inclined surface separators are subject to certain limitations with respect to the size of the dispersed phase droplet which may be collected. It is well-known that the settling velocity of droplets of a dispersed phase, whether it be oil or water, in a second, immiscible continuous phase, increases with the square of the droplet diameter. For a given two-phase system, there is always a dispersed phase droplet size below which any device which depends on gravitation to affect separation, will be impractical. For example, in the removal of oil dispersed in water, it is generally accepted that it is economically and technologically impractical to attempt removal of oil droplets smaller than 80 microns with this type of separator. Refer to Boyd, J.L., Shell, G.L. and Dahlstrom, D.A., A.I.Ch.E. Symposium Series, No. 124, 68, 393-401 (1971).

Conclusion

Both electric coalescence and the coalescence effected by an inclined surface separator are subject to limitations in the resolution of dispersions of water, or brine, in oil. Electric coalescence devices are capable of coalescing extremely small water droplets, but there is an upper limit to the droplet size achievable determined by the physical properties of the two phases and the characteristics of the electrical field, or fields, employed. If water droplet diameters could be increased beyond this upper limit, retention times required to effect adequate phase disengagement would be reduced. The inclined surface separator is not a feasible device for the coalescence of very small water droplets, but is ideally suited

0085847

for further coalescence of water droplets produced by electrical coalescence.

## DISCLOSURE OF THE INVENTION

The present invention contemplates the process of passing an emulsion of a relatively polar dispersed liquid phase and a relatively non-polar continuous liquid phase through an electric field, or fields, and a mechanical separator providing a collection surface for the dispersed phase. Following the electric field and mechanical separator, quiescent disengagement zones are provided in which the separation of the liquids is enhanced by avoiding direct, vertical flow of the disengaging liquids in opposition to each other.

The invention further contemplates the provision of a horizontally extended vessel shell in which the emulsion of liquids is sequentially passed through an electric field, or fields, generated by charged electrodes, and a mechanical separator unit providing parallel passages inclined downwardly from the horizontal flow of the emulsion. Following the section of the vessel in which the electric field electrodes are mounted and the section in which the mechanical separator plate unit is mounted, quiescent disengaging zones are provided for the liquids flowing from the electric field, or fields, and the separator unit.

Other objects, advantages, and features of the invention will become apparent to one skilled in the art upon consideration of the written specification, appended claims and accompanying drawing.

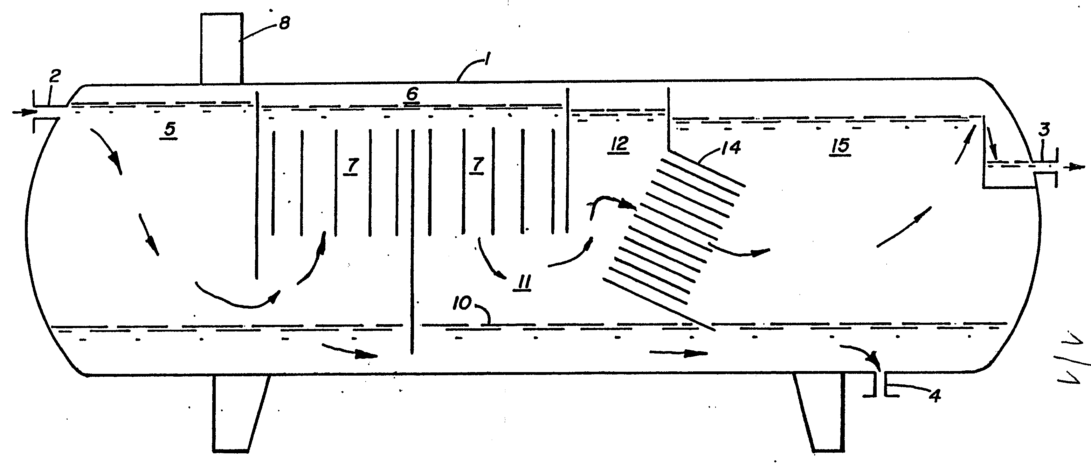

## BRIEF DESIGNATION OF THE DRAWING

The drawing is a sectioned elevation of a horizontally extended vessel having an electrode system and an inclined plate separator in which the present invention is embodied.

## BEST MODE FOR CARRYING OUT THE INVENTION

### General

The best mode embodying the invention speaks, specifically, to the process of a mixture of oil well fluids to separate them. More particularly, these liquids separated are oil and water. It is recognized that the water originates in the formation from which oil is extracted and is, at times, referred

T-820010

0085847

to as brine. All this terminology related to water is, at times, swept into the phrase "aqueous phase".

In processing the liquid/liquid mixture within an electric field, it is necessary to distinguish the oil and water from each other on the basis of their electrical characteristics. Therefore, the terminology, at times, slips into the posture of referring to the water as conductive and the more polar of the liquids and the oil as nonconductive and the nonpolar of the liquids. This terminology is well developed in the art and should cause no confusion.

The field developed by charging electrodes has been rather consistently referred to as an "electric" field. It is common to also refer to the field as "electrostatic". Should the terminology become mixed in the use of these terms, there is little concern that those skilled in the art will be confused.

Turning to the mechanical device which is mounted to receive the processed fluids from the electric field, it is advisable to point out that the parallel plates of this unit are referred to as an "array". It will be readily observed from the drawing that a number of these parallel plates can be referred to as "nesting" together to form parallel passages between the plates through which the processed liquids pass.

The broad concept of the invention is to arrange a plate surface in the stream of processed fluids so that the dispersed liquid phase will collect upon the surface. Of course, beneath this broad concept, is that of a plurality of such plates providing a plurality of collection surfaces and a plurality of passages which function as will be reviewed with monotonous regularity.

The drawing discloses a sectioned elevation of a horizontally extended shell 1 in the simplest terms. An emulsion of oil and water is introduced into the lefthand end of the shell through conduit 2. Separated by the invention, the oil is removed from shell 1 through upper outlet 3, and water is removed from the shell 1 through lower outlet 4. There may be gas in the emulsion introduced into the shell 1. For the purposes of disclosing the present invention, the gas will be ignored, the invention being directed to the liquid/liquid separation of oil and water.

Internally, the shell 1 is divided into compartments. The first compartment 5 simply indicates that a heat source within this compartment is arranged to be contacted by the well stream flowing through compartment 5. The purpose of this arrangement is to elevate the temperature of the well stream as may be required to enhance the liquid/liquid separation carried out by the downstream embodiment of the invention. Of course, this heat input to the well stream could be supplied by a heater in conduit 2 established upstream of shell 1. On the other hand, it may not be necessary to introduce any heat into the well stream in thermal preparation for its processing within shell 1.

There is significance to the horizontal orientation of shell 1. Each compartment within shell 1 receives the horizontally flowing liquids. The horizontal flow of the processed liquids, within each compartment, may be directed vertically, but the flow between compartments is significant in its horizontal orientation. After the liquid mixture has received the force provided within each compartment, some form of substantially horizontal flow space is provided in which a degree of disengagement between the immiscible liquids is expected. Controlled in their horizontal flow, these disengaged liquids have the maximum opportunity to gravitate upward or downward, in separation, without opposing each other.

Electric Section

Compartment 6 is downstream of heater compartment 5 and receives the well stream within the temperature range suitable for initiation of the liquid/liquid separation in the electric field of compartment 6. The electric field in compartment 6 is disclosed as generated between electrodes 7, the electrodes being charged from a transformer 8. The arrangement of electrodes 7, the baffles required to properly direct the well stream through the electric field, and all other mechanical and circuit arrangements need not be contemplated in all of their available variations. The art is replete with the many variations for effective application of electric fields to the resolution of mixtures of relatively polar liquids dispersed in relatively non-polar liquids. This phenomenon has been exhaustively analyzed in the previous Background Art section of

T-820010

this application, including the references incorporated therein.

The end result of passing the well stream through compartment 6, and its electric field, is that the water, or aqueous phase, is formed into drops of increased size. Some are large enough to initiate their gravitation into a body of water 10 in the lower part of the shell 1.

Disengagement Zone

The mixture of liquids exposed to the electric field of compartment 6 flows essentially horizontally through zone 11. Admittedly, zone 11 is no more than the volume within shell 1 below the downstream of compartment 6. However, this quiescent zone enables a significant amount of coalesced liquids to disengage and gravitate upward, or downward, as a part of the separation goal. By flowing these liquids through compartment 11 horizontally, disengagement of the oil from the water, and the water from the oil, is provided with a minimum of opposing flow which would delay their separation.

Of course, not all of the liquids disengage from each other but remain as the mixture carried from zone 11 into the downstream compartment 12 in which is mounted a mechanical separation structure.

Mechanical Separator

The prior art has taught the use of an electric field as the "polishing" structure in the coalescing of water from oil. It became suddenly evident that the relatively small size water droplets coalesced in the electric field required the nurture of an additional force to increase the size of these droplets for more effective gravitational separation from their oil. Out of this awareness was born the concept that the electrically coalesced water droplets could be handed off to a collection surface whereon additional coalescence would effectively take place. Thus, the inclined, downwardly sloping plate separator was conceived as useful on the discharge of the electric field compartment 6.

An array 14 of parallel plates is mounted in compartment 12 so that the passages between the parallel plates will receive the discharge from the electric field of compartment 6. The water droplets contact the surface of the plates of the array, travel along the surface of the plates while additional coalescence takes place, and leave the surface of the plates with sizes large enough to positively gravitate downward to join the body of water in the lower part of shell 1. The oil, of course, ascends to join the collected oil in the upper portion of compartment 15. Both fluids are then respectively removed by their separate conduits. Although array 14 is disclosed as a plurality of plates forming parallel passages for the disengaging liquids and collection surfaces for the dispersed phase, the broad concept is simply to provide a surface at an angle to the flow of the mixture upon which the droplets of the dispersed phase coalesce to sizes larger than obtainable by the electric field. The preferred application of this concept would employ as narrow a spacing between the collection surfaces as is practical so as to limit, as much as possible, the distance a droplet of the dispersed phase must gravitate before being collected. The actual reduction to practice will preferably include the plurality of parallel plates in the array, but the concept broadly stipulates a "surface" inclining at an angle to the horizontal flow of the liquid mixture. In any event, a quiescent zone is provided downstream of this array 14, this zone being similar to zone 11.

Second Disengagement Zone

Again, downstream of the array 14, a volumetric section of the shell 1 is provided for disengagement of the additionally coalesced liquids of the mixture. Within this volume, the liquids discharged from the array 14 are given further opportunity to disengage, the oil ascending and the water descending to join their respective collections at the top and bottom of shell 1. Again, it is emphasized that the disengaging liquids are released essentially horizontally from the array 14 to give as little interference as possible to the ascent of the oil and descent of the water. The remaining arrangements for withdrawal of the oil and water separately from shell 1 become more commentary to the overall process carried out by the disclosed structure.

Conclusion

Whether defined as a process, or system, the present invention first places the force of an electric field upon the mixture of liquids and _then_ places the force of a mechanical separator upon the liquids to drive the liquids toward their separation. For the first time, the roll of the electric field is reversed in its coalescing function. The electric field is shifted from a position at the end of the separation process toward the beginning of the separation process. A mechanical separation unit is placed to finish the job begun by the electric field.

After coalescence of the liquids is given a push, first by the electric field, then by the mechanical separator, horizontal flow within a quiescent zone is provided to give the maximum opportunity for the coalesced liquids to separate by gravity.

From the foregoing, it will be seen that this invention is one well adapted to attain all of the ends and objects hereinabove set forth, together with other advantages which are obvious and inherent to the method and apparatus.

It will be understood that certain features and subcombinations are of utility and may be employed without reference to other features and subcombinations. This is contemplated by and is within the scope of the invention.

As many possible embodiments may be made of the invention without departing from the scope thereof, it is to be understood that all matter herein set forth or shown in the accompanying drawings is to be interpreted in an illustrative and not in a limiting sense.

CLAIMS

1.  The method of separating a mixture of two immiscible liquids
        in which one is relatively polar and conductive and
        constitutes the dispersed phase of the mixture and the
        other of which is relatively non-polar and nonconductive and constitutes the continuous phase of the mixture, including,
    first passing the mixture through an electric field (7) to
        coalesce smaller droplets of the relatively polar liquid,
    second passing the mixture from the electric field through a
        first disengagement zone (11) in which the larger coalesced droplets of polar liquid are disengaged from the
        non-polar liquid by gravitating downward,
    third passing the remaining mixture of polar and non-polar
        liquids over a downwardly sloping surface (14) for col-
        ection and further coalescence of the dispersed polar
        liquid droplets,
    fourth passing the coalesced polar liquid droplets from the
        coalescing collection surface into a second disengagement zone (15) to gravitate downward in disengagement
        from the non-polar liquid,
    collecting the separated polar and non-polar liquids into
        bodies (3,10),
    and removing liquid from the separated bodies.
2.  In a system including a horizontal shell (1) with an entrance
        conduit (2) in one end and containing in series a first
        compartment (6) and a second zone (11) and a third compartment (12) and a fourth compartment (15) with an oil
        outlet conduit (3) and a water outlet conduit (4) from
        compartment 15 and having an electrostatic field with
        electrodes (7) mounted in the first compartment,
        characterized by,
    means for flowing into the first compartment through the inlet conduit (2) a mixture of two immiscible liquids in
        which one is relatively polar and conductive and constitutes  the dispersed phase of the mixture and the other
        of which is relatively non-polar and nonconductive and
        constitutes the continuous phase of the mixture,
    and a mechanical separator unit (14) mounted in the third
        compartment presenting a downwardly inclined surface
        (14) to the flow of liquids from the second compartment,
    whereby the mixture of liquids flowing through the first compartment are subjected to the electrostatic field generated between the electrodes (7) and thereafter flow into the second zone (11) which receives the mixture in which polar liquid droplets have been coalesced and wherein disengagement takes place between the coalesced polar droplets and non-polar liquid and the liquids from the second compartment flow into the third compartment wherein they are received on the inclined plates of the mechanical separator unit to collect thereon and further coalesce the polar liquid droplets and the liquids flow therefrom substantially horizontal into the fourth compartment where the polar liquids gravitate downward and the non-polar liquids gravitate upward for removal from their respective outlets.

## European Patent Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-4 257 895 (F.L.MURDOCK) *Claims 1-8; figure 1; column 1, line 51 - column 5, line 2* | 1,2 | C 10 G 33/02 |
| D,A | US-A-3 772 180 (F.L.PRESTRIDGE) *Claims 1-10* | 1 | |
| D,A | US-A-3 847 775 (F.L.PRESTRIDGE) *Claims 1-5* | 1 | |
| D,A | US-A-4 116 790 (F.L.PRESTRIDGE et al.) | | |
| D,A | US-A-4 308 127 (F.L.PRESTRIDGE) | | |

**TECHNICAL FIELDS SEARCHED (Int. Cl. 3)**

C 10 G

The present search report has been drawn up for all claims

| Place of search | Date of completion of the search | Examiner |
|---|---|---|
| THE HAGUE | 26-04-1983 | PIELKA I.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82